# EUROPÄISCHE PATENTANMELDUNG

(11) **EP 4 789 903 A1**
(43) Veröffentlichungstag der Anmeldung: **12.08.2026**
(21) Anmeldenummer: 26155563.5
(22) Anmeldetag: 30.01.2026
(51) Int. Cl.: B60L 50/60, B60L 53/22, H02J 7/00, H02M 3/335, H02M 3/337

(54) **TRAKTIONSNETZ**

(30) Priorität: 10.02.2025 DE 102025104868
(71) Anmelder: Volkswagen Aktiengesellschaft, 38440 Wolfsburg (DE)
(72) Erfinder: Gaona, Daniel, 38440 Wolfsburg (DE); Kusch, Rüdiger, 38440 Wolfsburg (DE)

(57) **Zusammenfassung**

Die Erfindung betrifft ein Traktionsnetz (1) für ein Elektro- oder Hybridfahrzeug, umfassend mindestens eine Hochvoltbatterie (2), einen Wechselrichter (4), mindestens einen Zwischenkreiskondensator (3) und mindestens einen DC/DC-Wandler (6), wobei der mindestens eine DC/DC-Wandler (6) zwischen der Hochvoltbatterie (2) und dem Wechselrichter (4) angeordnet ist und mindestens einen Transformator (21) aufweist, wobei ein positiver Anschluss (12) der Hochvoltbatterie (2) mit einem positiven Eingang (13) des DC/DC-Wandlers (6) auf der Primärseite (14) verbunden ist und ein negativer Anschluss (15) der Hochvoltbatterie (2) mit einem negativen Eingang (16) des DC/DC-Wandlers (6) auf der Primärseite (14) verbunden ist, wobei der positive Anschluss (12) der Hochvoltbatterie (2) über eine Verbindungsleitung (20) mit einem negativen Anschluss (19) des DC/DC-Wandlers (6) auf der Sekundärseite (18) verbunden ist.

## Beschreibung

Die Erfindung betrifft ein Traktionsnetz für ein Elektro- oder Hybridfahrzeug.

Derartige Traktionsnetze für ein Elektro- oder Hybridfahrzeuge umfassen eine Hochvoltbatterie, mindestens einen Zwischenkreiskondensator und einen Wechselrichter, wobei der Wechselrichter mit einer Elektromaschine verbunden ist. Die Wechselrichter sind meist als Pulswechselrichter ausgebildet und können als 2-Level- oder als 3-Level-Wechselrichter ausgebildet sein. Weiter ist bereits vorgeschlagen worden, zwischen der Hochvoltbatterie und dem Wechselrichter einen DC/DC-Wandler anzuordnen, der die Spannung der Hochvoltbatterie hochsetzt. Dies hat mehrere Vorteile. Zum einen kann die Hochvoltbatterie eine geringere Nennspannung aufweisen und zum anderen können Spannungsschwankungen der Hochvoltbatterie aufgrund eines schwankenden SOCs kompensiert werden. Nachteilig ist der erhöhte Bauteileaufwand.

Der Erfindung liegt das technische Problem zugrunde, ein Traktionsnetz für ein Elektro- oder Hybridfahrzeug mit einem DC/DC-Wandler zu schaffen, bei dem die Anforderungen an die Bauelemente reduziert sind.

Die Lösung des technischen Problems ergibt sich durch ein Traktionsnetz mit den Merkmalen des Anspruchs 1. Weitere vorteilhafte Ausgestaltungen der Erfindung ergeben sich aus den Unteransprüchen.

Das Traktionsnetz für ein Elektro- oder Hybridfahrzeug umfasst mindestens eine Hochvoltbatterie, einen Wechselrichter, mindestens einen Zwischenkreiskondensator und mindestens einen DC/DC-Wandler. Der DC/DC-Wandler ist zwischen der Hochvoltbatterie und dem Wechselrichter angeordnet und weist mindestens einen Transformator auf. Dabei ist ein positiver Anschluss der Hochvoltbatterie mit einem positiven Eingang des DC/DC-Wandlers auf der Primärseite verbunden und ein negativer Anschluss der Hochvoltbatterie mit einem negativen Eingang des DC/DC-Wandlers auf der Primärseite verbunden. Weiter ist der positive Anschluss der Hochvoltbatterie über eine Verbindungsleitung mit einem negativen Ausgang des DC/DC-Wandlers auf der Sekundärseite verbunden. Durch diese Verschaltung wird bewirkt, dass der DC/DC-Wandler im Traktionsbetrieb auf der Sekundärseite nicht die volle Spannung für den Wechselrichter stellen muss, sondern nur die Differenz zur Spannung der Hochvoltbatterie, deren Spannung am negativen Ausgang anliegt. Dabei fließt auch ein Teil des Stromes von der Hochvoltbatterie an der Primärseite des DC/DC-Wandlers vorbei. Der Vorteil ist, dass die Leistungshalbleiter auf der Sekundärseite für kleinere Spannungen ausgelegt werden können, sodass der Bauteileaufwand reduziert und Kosten eingespart werden können. Auch im Rekuperationsbetrieb fließt ein Teil des Ladestromes für die Hochvoltbatterie direkt zur Hochvoltbatterie.

In einer Ausführungsform weist das Traktionsbordnetz ein Ladegerät auf, wobei der DC/DC-Wandler Teil des Ladegerätes ist. Derartige Ladegeräte werden auch als Onboard-Charger (OBC) bezeichnet. Mittels dieser lässt sich die Hochvoltbatterie aus einer ein- oder mehrphasigen externen Wechselspannungsquelle laden. Hierdurch wird also der DC/DC-Wandler im Traktionsbetrieb als Booster-DC/DC-Wandler und im AC-Ladebetrieb als DC/DC-Wandler zum Anpassen einer durch eine PFC-Stufe (Power Form Corrector) gleichgerichteten Wechselspannung genutzt, was den Bauteileaufwand weiter reduziert.

In einer weiteren Ausführungsform ist in der Verbindungsleitung mindestens ein Schaltelement angeordnet, wobei das Traktionsnetz vorzugsweise derart ausgebildet ist, in einem Ladebetrieb des Ladegerätes das mindestens eine Schaltelement zu öffnen. Hierdurch ist das Ladegerät galvanisch getrennt und so Traktionsnetz und Ladegerät galvanisch entkoppelt, was Anforderungen an die Isolation reduziert. Im Ladebetrieb wird dann die volle Leistung über den galvanisch getrennten DC/DC-Wandler übertragen. Da aber die Leistungen im Ladebetrieb erheblich geringer als im Traktionsbetrieb sind, stellt dies für die Leistungshalbleiter auf der Sekundärseite des DC/DC-Wandlers kein Problem dar.

In einer weiteren Ausführungsform sind mindestens zwei DC/DC-Wandler vorhanden, die parallel geschaltet sind. Hierdurch nimmt zwar die Anzahl der Bauteile zu, diese können aber einfacher aufgebaut sein. Ein weiterer Vorteil ist, dass dadurch ein Interleaved-Betrieb realisiert werden kann, was den Wirkungsgrad erhöht. Die beiden DC/DC-Wandler können dabei gleich aufgebaut sein.

In einer weiteren Ausführungsform ist der positive Anschluss der Hochvoltbatterie über eine Bypassleitung mit einem Schaltelement mit dem positiven Anschluss des DC/DC-Wandlers auf der Sekundärseite verbunden. Hierdurch kann der DC/DC-Wandler in bestimmten Betriebssituationen im Traktionsbetrieb überbrückt werden, sodass Wandlerverluste des DC/DC-Wandlers eingespart werden können.

In einer weiteren Ausführungsform ist auf der Sekundärseite des Transformators mindestens eine weitere Sekundärwicklung eines Niederspannungsbordnetzes angeordnet (z.B. 12 V oder 48 V). Ergänzend oder alternativ kann auch eine weitere Primärwicklung vorgesehen sein, über die dann ein Niederspannungsbordnetz geladen wird.

In einer weiteren Ausführungsform ist der mindestens eine DC/DC-Wandler als Resonanzwandler ausgebildet.

In einer weiteren Ausführungsform ist das Traktionsnetz derart ausgebildet, im Traktionsbetrieb den Resonanzwandler mit fester Frequenz und festem Tastverhältnis zu betreiben. Dies vereinfacht die Ansteuerung und weist einen hohen Wirkungsgrad auf.

In einer weiteren Ausführungsform ist das Traktionsnetz derart ausgebildet, den Resonanzwandler im Ladebetrieb des Ladegerätes als CLLC- oder als Resonanz DAB (dual active bridge) zu betreiben.

Die Erfindung wird nachfolgend anhand bevorzugter Ausführungsbeispiele näher erläutert. Die Figuren zeigen:
- Fig. 1: ein schematisches Blockschaltbild eines Traktionsnetzes in einer ersten Ausführungsform,
- Fig. 2: ein schematisches Blockschaltbild eines Teils eines Traktionsnetzes in einer zweiten Ausführungsform mit zwei DC/DC-Wandlern,
- Fig. 3: eine Schaltungsanordnung für einen Teil eines Traktionsnetzes mit einem Niederspannungsbordnetz,
- Fig. 4: eine schematische Darstellung eines Teils eines Traktionsnetzes in einer weiteren Ausführungsform,
- Fig. 5: eine schematische Darstellung eines Teils eines Traktionsnetzes in einer weiteren Ausführungsform mit zwei DC/DC-Wandlern und
- Fig. 6: eine weitere Schaltungsanordnung eines Teils eines Traktionsnetzes.

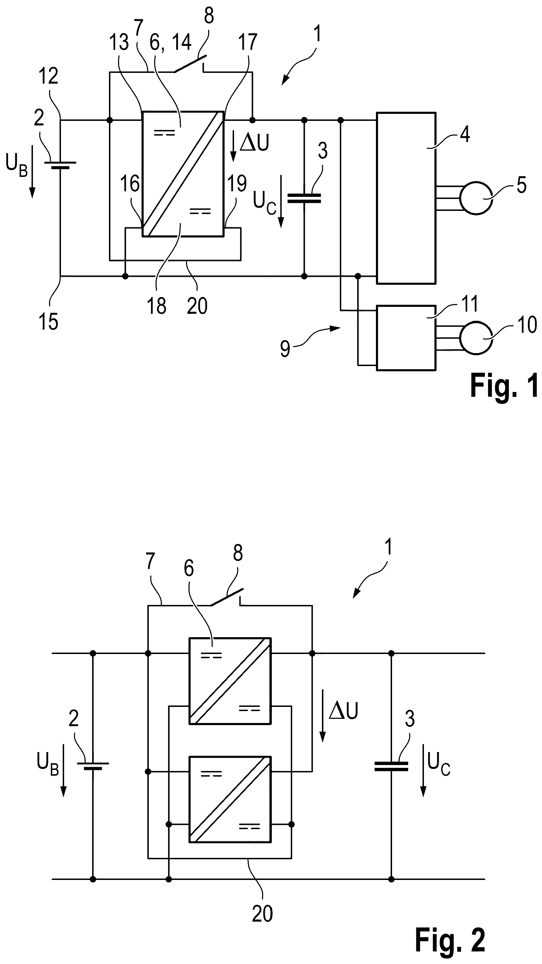

In der Fig. 1 ist ein Traktionsnetz 1 in einer ersten Ausführungsform dargestellt. Das Traktionsnetz 1 weist eine Hochvoltbatterie 2, einen Zwischenkreiskondensator 3 und einen Wechselrichter 4 auf, der mit einer Elektromaschine 5 verbunden ist. Weiter ist zwischen der Hochvoltbatterie 2 und dem Zwischenkreiskondensator 3 ein isolierter DC/DC-Wandler 6 angeordnet, der einen Transformator aufweist. Weiter dargestellt ist eine Bypassleitung 7 mit einem Schaltelement 8, die den DC/DC-Wandler 6 überbrückt. Weiter umfasst das Traktionsnetz 1 ein Ladegerät 9, das einen AC-Ladeanschluss 10, eine PFC-Stufe 11 und den DC/DC-Wandler 6 aufweist. Ein positiver Anschluss 12 der Hochvoltbatterie 2 ist mit einem positiven Eingang 13 des DC/DC-Wandlers 6 auf einer Primärseite 14 verbunden. Ein negativer Anschluss 15 der Hochvoltbatterie 2 ist mit einem negativen Eingang 16 des DC/DC-Wandlers 6 auf der Primärseite 14 verbunden. Ein positiver Anschluss 17 des DC/DC-Wandlers 6 auf der Sekundärseite 18 ist mit dem positiven Anschluss des Zwischenkreiskondensators 3 verbunden. Der positive Anschluss 12 der Hochvoltbatterie 2 ist darüber hinaus mit einem negativen Anschluss 19 des DC/DC-Wandlers 6 auf der Sekundärseite 18 über eine Verbindungsleitung 20 verbunden. Damit liegt am Anschluss 19 das positive Potential der Hochvoltbatterie 2 an.

Im Traktionsbetrieb soll die Spannung U_{B} der Hochvoltbatterie 2 in bestimmten Betriebssituationen hochgesetzt werden. Erfindungsgemäß wird nun diese hochgesetzte Spannung nicht vollständig über den DC/DC-Wandler 6 gestellt, sondern nur die Differenzspannung ΔU zwischen der gewünschten Spannung U_{C} und der Spannung U_{B} der Hochvoltbatterie 2, wobei gilt: U_{C} = U_{B} + ΔU. Ist U_{B} beispielsweise 600 V und die gewünschte Spannung U_{C} am Zwischenkreiskondensator 3 bzw. am Eingang des Wechselrichters 4 soll 800 V betragen, so wird der DC/DC-Wandler 6 derart angesteuert, um ein ΔU von 200 V zu erzeugen. Der Batteriestrom aus der Hochvoltbatterie 2 fließt dabei nur zu einem geringen Teil durch die Primärseite 14 des DC/DC-Wandlers 6. Der Hauptteil des Stromes fließt über die Verbindungsleitung 20 an der Primärseite 14 vorbei und direkt in die Halbleiterbauelemente auf der Sekundärseite 18. Da die Spannungen auf der Sekundärseite 18 im DC/DC-Wandler 6 geringer sind, können diese kostengünstiger ausgelegt werden. Durch den DC/DC-Wandler 6 können Spannungsschwankungen der Hochvoltbatterie 2 kompensiert werden und beliebige gewünschte Arbeitspunkte im Wechselrichter 4 eingestellt werden. In Betriebssituationen, in denen die Spannung U_{B} der Hochvoltbatterie 2 ausreichend ist, kann der DC/DC-Wandler 6 deaktiviert werden und der Schalter 8 geschlossen werden, sodass der DC/DC-Wandler 6 überbrückt wird und Wandlerverluste vermieden werden.

Im AC-Ladebetrieb fließt ebenfalls ein Großteil des Stromes aus der PFC-Stufe 11 über die Verbindungsleitung 20 direkt in die Halbleiterbauelemente der Primärseite 14 und von dort in die Hochvoltbatterie 2, wobei der andere Teil über den DC/DC-Wandler 6 fließt (von Sekundärzur Primärseite). Typischerweise arbeitet im AC-Ladebetrieb der DC/DC-Wandler 6 als Tiefsetzsteller.

In der Fig. 2 ist ein Teil eines Traktionsnetzes 1 dargestellt, das zwei DC/DC-Wandler 6 aufweist, die parallel geschaltet sind. Hierdurch kann die benötigte Leistung für ΔU aufgeteilt werden bzw. bei geringen ΔU von einem DC/DC-Wandler 6 alleine bereitgestellt werden, was wieder Wandlerverluste einspart.

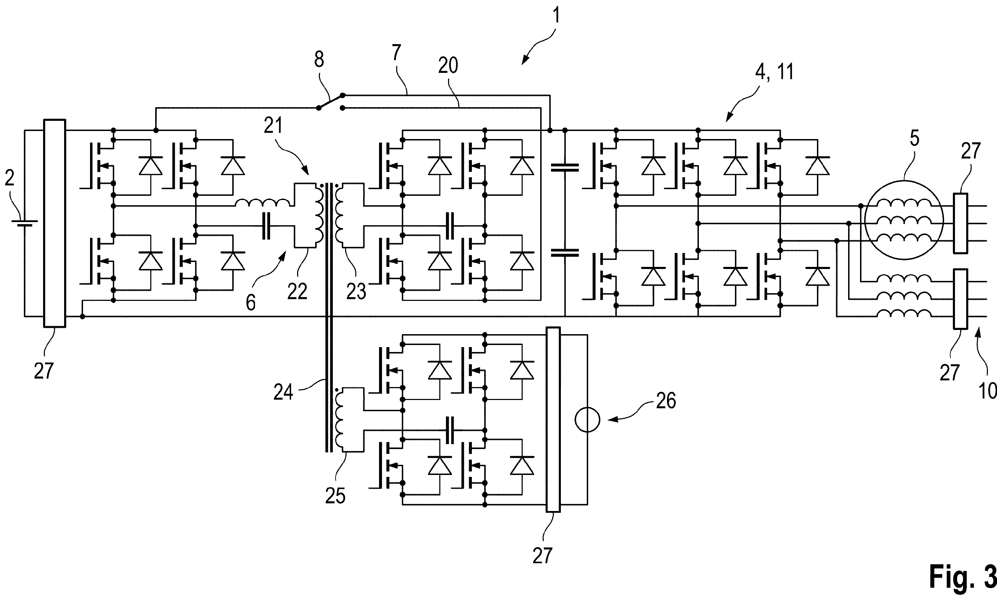

In der Fig. 3 ist eine mögliche schaltungstechnische Umsetzung dargestellt, wobei zusätzlich die PFC-Stufe 11 in den Wechselrichter 4 integriert wurde. Der DC/DC-Wandler 6 ist als Resonanzwandler ausgebildet und weist sowohl auf der Primärseite 14 als auch auf der Sekundärseite 18 zwei Halbbrücken auf. Der DC/DC-Wandler 6 weist einen Transformator 21 auf, der eine Primärwicklung 22 und eine Sekundärwicklung 23 aufweist, die einen gemeinsamen Kern 24 aufweisen. Das Schaltelement 8 ist geschlossen dargestellt, sodass in der dargestellten Schaltungsstellung der DC/DC-Wandler 6 überbrückt wird. Dabei ist eine weitere Sekundärwicklung 25 mit zwei nachgeschalteten Halbbrücken dargestellt, über die ein Niederspannungsbordnetz 26 versorgt wird. Weiter dargestellt sind schematisch verschiedene EMV-Filter 27. Nicht dargestellt sind die Hauptschütze, um die Hochvoltbatterie 2 abzutrennen, sowie Schaltelemente, um den AC-Ladeanschluss 10 im Traktionsbetrieb spannungsfrei zu schalten.

Bei den bisherigen Varianten ist das Ladegerät 9 nicht galvanisch getrennt, was häufig aber aus verschiedenen Gründen gewünscht ist.

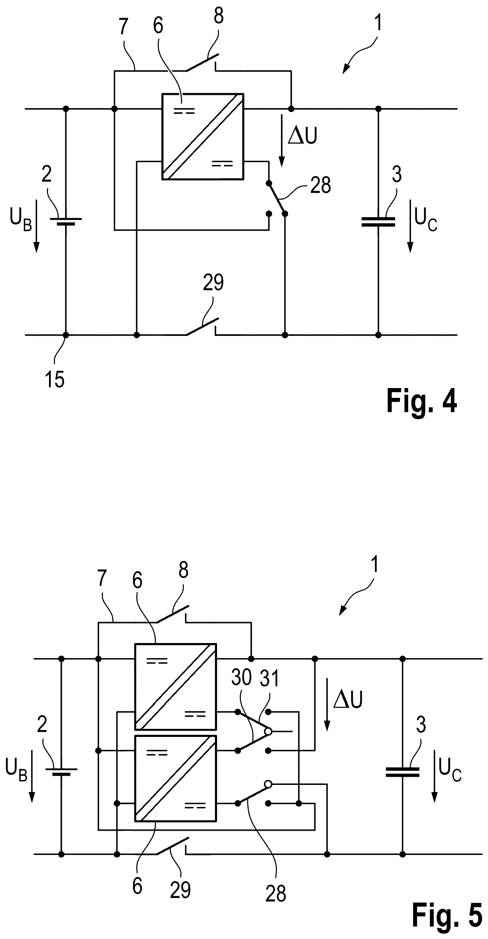

In der Fig. 4 ist schematisch ein Traktionsnetz 1 dargestellt, wobei im Ladebetrieb eine galvanische Trennung zur Hochvoltbatterie 2 realisierbar ist. Hierzu ist in der Verbindungsleitung 20 ein Schaltelement 28 angeordnet, mittels dessen die Verbindung auftrennbar ist und der negative Anschluss 19 mit dem negativen Anschluss des Zwischenkreiskondensators 3 verbindbar ist. Über ein weiteres Schaltelement 29 wird der negative Anschluss 15 der Hochvoltbatterie 2 vom Zwischenkreiskondensator 3 getrennt.

Hierdurch erfolgt das Laden aus der PFC-Stufe 11 ausschließlich über den DC/DC-Wandler 6, wobei durch den Transformator die galvanische Trennung realisiert ist.

In der Fig. 5 ist eine Erweiterung des Prinzips gemäß Fig. 4 mit zwei DC/DC-Wandlern 6 dargestellt. In der dargestellten Schaltstellung sind die beiden DC/DC-Wandler 6 zum Laden aus der PFC-Stufe 11 in Reihe geschaltet, was Vorteile bei der Anpassung der Windungszahlverhältnisse hat. Zum Traktionsbetrieb werden alle Schaltelemente 30, 31 umgeschaltet, sodass die beiden DC/DC-Wandler 6 parallel geschaltet sind.

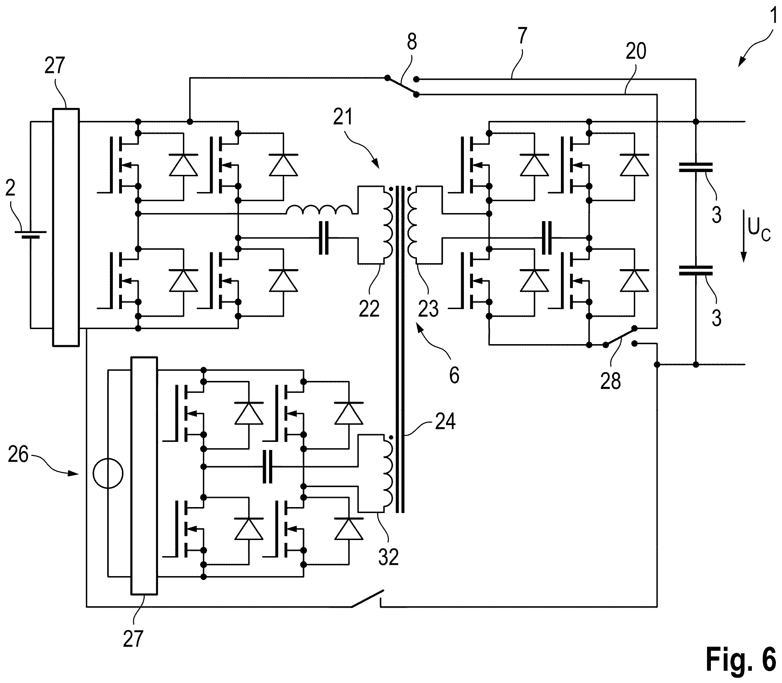

In der Fig. 6 ist schließlich eine schaltungstechnische Umsetzung des Traktionsnetzes 1 gemäß Fig. 4 dargestellt, wobei zusätzlich ein Niedervoltbordnetz 26 dargestellt ist, das über eine weitere Primärwicklung 32 mit dem Kern 24 gekoppelt ist, sodass beim Laden die Hochvoltbatterie 2 und das Niedervoltbordnetz 26 parallel geladen werden können. Der DC/DC-Wandler 6 ist als Resonanzwandler ausgebildet, der im Traktionsbetrieb vorzugsweise mit fester Frequenz und festem Abtastverhältnis angesteuert wird.

### Bezugszeichenliste

- 1: Traktionsnetz
- 2: Hochvoltbatterie
- 3: Zwischenkreiskondensator
- 4: Wechselrichter
- 5: Elektromaschine
- 6: DC/DC-Wandler
- 7: Bypassleitung
- 8: Schaltelement
- 9: Ladegerät
- 10: AC-Ladeanschluss
- 11: PFC-Stufe
- 12: positiver Anschluss
- 13: positiver Eingang
- 14: Primärseite
- 15: negativer Anschluss
- 16: negativer Eingang
- 17: positiver Anschluss
- 18: Sekundärseite
- 19: negativer Anschluss
- 20: Verbindungsleitung
- 21: Transformator
- 22: Primärwicklung
- 23: Sekundärwicklung
- 24: gemeinsamer Kern
- 25: Sekundärwicklung
- 26: Niederspannungsbordnetz
- 27: EMV-Filter
- 28: Schaltelement
- 29: Schaltelement
- 30: Schaltelement
- 31: Schaltelement
- 32: Primärwicklung
- U_{B}: Spannung der Hochvoltbatterie
- U_{C}: Spannung am Zwischenkreiskondensator
- ΔU: Differenzspannung

## Patentansprüche

1. Traktionsnetz (1) für ein Elektro- oder Hybridfahrzeug, umfassend mindestens eine Hochvoltbatterie (2), einen Wechselrichter (4), mindestens einen Zwischenkreiskondensator (3) und mindestens einen DC/DC-Wandler (6), wobei der mindestens eine DC/DC-Wandler (6) zwischen der Hochvoltbatterie (2) und dem Wechselrichter (4) angeordnet ist und mindestens einen Transformator (21) aufweist, wobei ein positiver Anschluss (12) der Hochvoltbatterie (2) mit einem positiven Eingang (13) des DC/DC-Wandlers (6) auf der Primärseite (14) verbunden ist und ein negativer Anschluss (15) der Hochvoltbatterie (2) mit einem negativen Eingang (16) des DC/DC-Wandlers (6) auf der Primärseite (14) verbunden ist, wobei der positive Anschluss (12) der Hochvoltbatterie (2) über eine Verbindungsleitung (20) mit einem negativen Anschluss (19) des DC/DC-Wandlers (6) auf der Sekundärseite (18) verbunden ist.

2. Traktionsnetz (1) nach Anspruch 1, **dadurch gekennzeichnet, dass** das Traktionsnetz (1) ein Ladegerät (9) aufweist, wobei der DC/DC-Wandler (6) Teil des Ladegerätes (9) ist.

3. Traktionsnetz (1) nach Anspruch 1 oder 2, **dadurch gekennzeichnet, dass** in der Verbindungsleitung (20) mindestens ein Schaltelement (28) angeordnet ist.

4. Traktionsnetz (1) nach Anspruch 3, **dadurch gekennzeichnet, dass** das Traktionsnetz (1) derart ausgebildet ist, in einem Ladebetrieb des Ladegeräts (9) das mindestens eine Schaltelement (28) zu öffnen.

5. Traktionsnetz (1) nach einem der vorangegangenen Ansprüche, **dadurch gekennzeichnet, dass** mindestens zwei DC/DC-Wandler (6) vorhanden sind, die im Traktionsbetrieb parallel verschaltet sind.

6. Traktionsnetz (1) nach einem der vorangegangenen Ansprüche, **dadurch gekennzeichnet, dass** der positive Anschluss (12) der Hochvoltbatterie (2) über eine Bypassleitung (7) mit einem Schaltelement (8) mit dem positiven Anschluss (17) des DC/DC-Wandlers (6) auf der Sekundärseite (18) verbunden ist.

7. Traktionsnetz (1) nach einem der vorangegangenen Ansprüche, **dadurch gekennzeichnet, dass** auf der Sekundärseite (18) des Transformators (21) eine weitere Sekundärinduktivität (25) eines Niederspannungsbordnetzes (26) angeordnet ist oder auf der Primärseite (14) des Transformators (21) eine weitere Primärinduktivität (32) eines Niederspannungsbordnetzes (26) angeordnet ist.

8. Traktionsnetz (1) nach einem der vorangegangenen Ansprüche, **dadurch gekennzeichnet, dass** der mindestens eine DC/DC-Wandler (6) als Resonanzwandler ausgebildet ist.

9. Traktionsnetz (1) nach Anspruch 8, **dadurch gekennzeichnet, dass** das Traktionsnetz (1) derart ausgebildet ist, im Traktionsbetrieb den Resonanzwandler mit fester Frequenz und festem Tastverhältnis zu betreiben.

10. Traktionsnetz (1) nach Anspruch 8 oder 9, **dadurch gekennzeichnet, dass** das Traktionsnetz (1) derart ausgebildet ist, den Resonanzwandler im Ladebetrieb des Ladegerätes (9) als CLLC- oder als Resonanz DAB zu betreiben.
